# EUROPÄISCHE PATENTSCHRIFT

(11) **EP 2 742 268 B1**
(45) Veröffentlichungstag und Bekanntmachung des Hinweises auf die Patenterteilung: **17.06.2015**
(21) Anmeldenummer: 12750564.2
(22) Anmeldetag: 07.08.2012
(51) Int. Cl.: F16K 17/196, F16K 24/00

(54) **VORRICHTUNG ZUM BE- UND ENTLÜFTEN EINES ÖLTANKS**
DEVICE FOR ADMITTING AIR TO, AND EXTRACTING AIR FROM, AN OIL TANK
DISPOSITIF POUR VENTILER ET PURGER UN RÉSERVOIR DE MAZOUT

(30) Priorität: 09.08.2011 DE 102011052525
(43) Veröffentlichungstag der Anmeldung: 18.06.2014
(73) Patentinhaber: FSP Fluid Systems Partners Holding AG, 6340 Baar (CH)
(72) Erfinder: BAUMGÄRTNER, Reinhard, 76689 Karlsdorf (DE); MÖSSINGER, Klaus, 74182 Obersulm (DE)
(74) Vertreter: Hoeger, Stellrecht & Partner Patentanwälte
(86) Internationale Anmeldenummer: PCT/EP2012/065430
(87) Internationale Veröffentlichungsnummer: WO 2013/020973

(56) Entgegenhaltungen:
- WO-A1-02/08597
- DE-A1- 2 823 403
- DE-A1- 19 523 645
- DE-A1- 19 746 106
- DE-C1- 4 300 441

## Beschreibung

Die Erfindung betrifft eine Vorrichtung zum Be- und Entlüften eines Öltanks, mit einem Gehäuse, dessen Innenraum über eine erste Gehäuseöffnung mit dem Öltank verbindbar ist und der über eine zweite Gehäuseöffnung mit dem das Gehäuse umgebenden Außenraum in Strömungsverbindung steht, wobei zwischen der ersten und der zweiten Gehäuseöffnung ein Ventilkörper im Innenraum beweglich gehalten ist, der einen von einem ersten Schließglied verschließbaren und durch Beaufschlagen mit einem ersten Differenzdruck freigebbaren ersten Durchlass aufweist und der ausgehend von einer Schließstellung, in der er in Kooperation mit einem zweiten Schließglied einen zweiten Durchlass verschließt, durch Beaufschlagen mit einem dem ersten Differenzdruck entgegen gerichteten zweiten Differenzdruck in eine den zweiten Durchlass freigebende Freigabestellung bewegbar ist.

Derartige Vorrichtungen kommen insbesondere in Hydrauliksystemen zum Einsatz, bei denen Hydrauliköl bedarfsweise aus einem Öltank entnommen bzw. diesem zugeführt wird. Durch die Befüllung bzw. Entleerung von Hydraulikzylindern und Druckspeichern des Hydrauliksystems sowie durch Änderungen der Öltemperatur werden im Öltank Schwankungen des Ölniveaus hervorgerufen, aufgrund derer es erforderlich ist, über die Vorrichtung einen Luftaustausch zwischen dem Innenraum des Öltanks und der Außenatmosphäre zu ermöglichen. Beispielsweise wird das Ölniveau im Öltank bei der Befüllung von Hydraulikzylindern abgesenkt, wobei über die Vorrichtung Luft aus der Außenatmosphäre in den Öltank einströmt. Wird der Hydraulikzylinder entleert, so strömt das Hydrauliköl in den Öltank zurück und dessen Ölniveau steigt an. Dabei wird Luft über die Vorrichtung nach außen abgegeben.

Der Luftaustausch zwischen dem Öltank und dem das Gehäuse der Vorrichtung umgebenden Außenraum erfolgt druckabhängig über den ersten bzw. über den zweiten Durchlass der Vorrichtung. Die beiden Durchlässe sind zwischen der ersten Gehäuseöffnung und der zweiten Gehäuseöffnung positioniert. Liegt ein erster Differenzdruck zwischen dem Bereich der ersten Gehäuseöffnung und dem Bereich der zweiten Gehäuseöffnung vor, so wird der erste Durchlass vom ersten Schließglied freigegeben und Luft kann durch den ersten Durchlass hindurch strömen, so dass sich ein Druckausgleich zwischen dem Druck im Bereich der ersten Gehäuseöffnung und dem Druck im Bereich der zweiten Gehäuseöffnung einstellt. Liegt ein dem ersten Differenzdruck entgegen gerichteter zweiter Differenzdruck vor, so geht der Ventilkörper in seine Freigabestellung über. In der Freigabestellung des Ventilkörpers gibt der zweite Schließkörper den zweiten Durchlass frei, so dass Luft durch den zweiten Durchlass hindurch strömen und sich dadurch der Druck ausgleichen kann.

Der erste Differenzdruck kann beispielsweise auf die erste Gehäuseöffnung gerichtet sein, indem der Druck im Bereich der ersten Gehäuseöffnung und damit auch der Druck innerhalb des Öltanks kleiner ist als der Druck im Bereich der zweiten Gehäuseöffnung und damit auch kleiner als der Druck im Bereich des Außenraumes. Es kann dann über den ersten Durchlass eine Belüftung des Öltanks erfolgen. Der zweite Differenzdruck ist dann von der ersten Gehäuseöffnung in Richtung auf die zweite Gehäuseöffnung gerichtet und stellt sich bei einem Überdruck im Öltank ein.

Eine Vorrichtung zum Be- und Entlüften eines Öltanks der eingangs genannten Art ist aus der Offenlegungsschrift DE 28 23 403 A1 bekannt. Der darin beschriebenen Ventilkörper wird von einer Rückstellfeder in Richtung auf eine radial einwärts gerichtete Innenschulter im Innenraum des Gehäuses gedrückt. Zwischen der Innenschulter und dem Ventilkörper ist ein Dichtring angeordnet, an den sich radial innenseitig eine Membran anschließt, die in einem zentralen Bereich an der der Rückstellfeder abgewandten Seite des Ventilkörpers anliegt. Dadurch kann die Membran einen ersten Durchlass des Ventilkörpers verschließen. Unterschreitet der Druck im Öltank den Druck im Außenraum, so hebt die Membran vom zentralen Bereich des Ventilkörpers ab und gibt dadurch den ersten Durchlass frei, so dass sich ein Druckausgleich einstellen kann. Überschreitet der Druck im Öltank den Druck im Außenraum, so wird der Ventilkörper zusammen mit dem Dichtring entgegen der Wirkung der Rückstellfeder in axialer Richtung in eine Freigabestellung verschoben, in der er einen Abstand zur Innenschulter des Gehäuses einnimmt und dadurch einen zweiten Durchlass freigibt, der in der Schließstellung des Ventilkörpers vom Dichtring verschlossen ist.

Aufgabe der vorliegenden Erfindung ist es, eine Vorrichtung zum Be- und Entlüften eines Öltanks der eingangs genannten Art derart weiterzubilden, dass der erste Durchlass bereits bei Vorliegen eines geringen ersten Differenzdruckes freigebbar ist.

Diese Aufgabe wird bei einer Vorrichtung zum Be- und Entlüften der gattungsgemäßen Art erfindungsgemäß dadurch gelöst, dass das erste Schließglied eine kalottenförmige Ventilmembran umfasst, die einen Dichtungsbereich aufweist, der durch Beaufschlagung der Ventilmembran mit dem ersten Differenzdruck von der ersten Dichtfläche abhebbar und bei Beaufschlagung mit dem zweiten Differenzdruck an die erste Dichtfläche anpressbar ist.

Die kalotten- oder kugelkappenförmige Gestalt der Ventilmembran gibt den ersten Durchlass bereits bei einem geringen ersten Differenzdruck frei. Aufgrund ihrer kalottenförmigen Gestalt weist die Ventilmembran eine große Fläche auf, die mit dem ersten Differenzdruck beaufschlagt werden kann. Die große, mit Druck beaufschlagte Fläche hat eine große Beaufschlagungskraft zur Folge. Dadurch wird ein Dichtungsbereich der Ventilmembran bereits bei einem geringen ersten Differenzdruck von der ersten Dichtfläche abgehoben und der erste Durchlass freigegeben, und bereits bei Vorliegen eines geringen zweiten Differenzdruckes wird der Dichtungsbereich mit großer Kraft gegen die erste Dichtfläche gepresst und dadurch der erste Durchlass zuverlässig verschlossen.

Günstigerweise ist die Ventilmembran elastisch verformbar. Sie kann beispielsweise aus einem Elastomer gefertigt sein, insbesondere aus einem natürlichen oder synthetischen Kautschukmaterial. Die elastische Verformbarkeit stellt auf konstruktiv einfache Weise sicher, dass die Ventilmembran bei fehlendem Differenzdruck selbsttätig ihre Schließstellung einnimmt, in der sie an der ersten Dichtfläche anliegt. Unter der Wirkung des ersten Differenzdruckes kann die Ventilmembran unter elastischer Verformung von der zweiten Dichtfläche abheben.

Vorzugsweise umgibt die erste Dichtfläche die Ventilmembran in Umfangsrichtung.

Der Dichtungsbereich der Ventilmembran ist bevorzugt linienförmig an die erste Dichtfläche anlegbar. Die linienförmige Anlage verstärkt die Dichtwirkung der Ventilmembran, so dass bereits bei einem geringen Differenzdruck eine hohe Dichtwirkung erzielt werden kann.

Bevorzugt bildet der Dichtungsbereich den Außenrand der Ventilmembran.

Die erste Dichtfläche ist vorteilhafterweise zylindrisch ausgestaltet. Dies gibt auf konstruktiv einfache Weise die Möglichkeit, die kalottenförmige Ventilmembran mit einem Außenrand linienförmig an die erste Dichtfläche anzulegen. Der Außenrand der Ventilmembran bildet somit einen Dichtungsbereich in Form einer Dichtkante, die aufgrund der verhältnismäßig großen Fläche der kalottenförmigen Ventilmembran, auf die der Differenzdruck einwirkt, bereit bei geringem zweiten Differenzdruck mit großer Kraft gegen die zugeordnete erste Dichtfläche gepresst wird.

Günstigerweise umfasst die Ventilmembran einen Stützbereich, der durch Beaufschlagung der Ventilmembran mit dem zweiten Differenzdruck von einer Stützfläche abstützbar ist. Die Stützfläche ist bevorzugt konisch oder kugelkalottenförmig ausgestaltet.

Bei einer vorteilhaften Ausgestaltung der Erfindung ist die Ventilmembran am Ventilkörper gehalten. Liegt ein erster Differenzdruck vor, so nimmt der Ventilkörper seine Schließstellung ein und die am Ventilkörper gehaltene Ventilmembran hebt von der zugeordneten ersten Dichtfläche ab und gibt dadurch den ersten Durchlass frei. Über den ersten Durchlass erfolgt dann ein Druckausgleich. Gleichzeitig liegt die Dichtlippe an der zugeordneten zweiten Dichtfläche an und verschließt den zweiten Durchlass. Geht der Ventilkörper durch Beaufschlagung mit einem zweiten Differenzdruck in seine Freigabestellung über, so wird die Ventilmembran unter der Wirkung des zweiten Differenzdruckes gegen die zugeordnete erste Dichtfläche gepresst und gleichzeitig nimmt die Dichtlippe einen Abstand zur zugeordneten zweiten Dichtfläche ein. Damit wird der zweite Durchlass freigegeben und über den zweiten Durchlass ein Druckausgleich ermöglicht.

Besonders günstig ist es, wenn die erste Dichtfläche am Ventilkörper angeordnet ist.

Bei einer besonders bevorzugten Ausgestaltung der Erfindung weist der erste Durchlass einen konischen Bereich auf, in dem die Ventilmembran angeordnet ist. Dies ermöglicht eine kompakte Bauform des Ventilkörpers einschließlich der daran gehaltenen Ventilmembran.

Die Ventilmembran ist bevorzugt mit einem schaftartigen Halteglied verbunden, das mit dem Ventilkörper formschlüssig verbunden ist. Das schaftartige Halteglied bildet in Kombination mit der kalottenförmigen Ventilmembran ein pilz- oder schirmartiges erstes Schließglied aus, das mit dem Ventilkörper formschlüssig verbunden ist. Die Montage der erfindungsgemäßen Vorrichtung wird dadurch vereinfacht.

Es kann beispielsweise vorgesehen sein, dass das schaftartige Halteglied auf einen Zapfen des Ventilkörpers aufgesteckt ist.

Günstigerweise ist die Ventilmembran einstückig mit dem schaftartigen Halteglied verbunden.

Um sicherzustellen dass auch der zweite Durchlass einerseits dicht verschließbar ist, wenn der Druck im Öltank dem Druck im Außenraum entspricht, andererseits aber bereits bei Vorliegen einer geringen zweiten Druckdifferenz freigebbar ist, weist das zweite Schließglied bei einer bevorzugten Ausführungsform der Erfindung eine Dichtlippe auf, die in der Schließstellung des Ventilkörpers in radialer Richtung an einer zugeordneten zweiten Dichtfläche anliegt und die durch eine axiale Bewegung des Ventilkörpers von dessen Schließstellung in dessen Freigabestellung in Abstand zur zweiten Dichtfläche bringbar ist.

Günstigerweise erstreckt sich die Dichtlippe in die dem zweiten Differenzdruck entgegen gerichtete Richtung. Dadurch wird die Dichtlippe mit einer umso größeren Kraft gegen die zweite Dichtfläche gepresst, je größer der zweite Differenzdruck ist.

Von Vorteil ist es, wenn der zweite Durchlass als den Ventilkörper umgebender Ringspalt ausgestaltet ist, der in der Schließstellung des Ventilkörpers von der Dichtlippe verschließbar ist.

Es kann vorgesehen sein, dass die Dichtlippe im Gehäuse festgelegt ist und der Ventilkörper die erste Dichtfläche aufweist. Die Dichtlippe ist bei einer derartigen Ausgestaltung im Gehäuse unverschieblich gehalten und die mit der Dichtlippe zusammenwirkende zweite Dichtfläche ist zusammen mit dem Ventilkörper in axialer Richtung verschiebbar. Wird der Ventilkörper unter der Wirkung des zweiten Differenzdruckes in axialer Richtung in seine Freigabestellung verschoben, so kann die Dichtlippe in axialer Richtung einen Abstand zur zweiten Dichtfläche einnehmen und dadurch den zweiten Durchlass freigeben. Günstig ist es, wenn die Dichtlippe mit einem ringförmigen Halteglied verbunden ist, das zwischen eine erste Haltefläche und eine zweite Haltefläche eingespannt ist. Die Halterung der Dichtlippe erfolgt bei einer derartigen Ausgestaltung dadurch, dass ein mit der Dichtlippe verbundenes erstes Halteglied zwischen zwei Halteflächen eingespannt wird.

Vorzugsweise ist die Dichtlippe mit dem ringförmigen Halteglied einstückig verbunden. Dichtlippe und ringförmiges Halteglied bilden somit ein einteiliges Bauteil aus. Dies erleichtert die Montage der Dichtlippe.

Bevorzugt ist das ringförmige Halteglied in axialer Richtung zwischen den beiden Halteflächen eingespannt. Dies hat eine weitere Vereinfachung der Montage zur Folge.

Günstigerweise ist das ringförmige Halteglied zwischen einem in den Innenraum des Gehäuses einsetzbaren Klemmring und einer Stützfläche des Gehäuses eingeklemmt. Der Klemmring kann bei der Montage der erfindungsgemäßen Vorrichtung in das Gehäuse eingesetzt werden und zwischen den Klemmring und eine Stützfläche des Gehäuses kann das ringförmige Halteglied eingeklemmt werden.

Bevorzugt ist der Klemmring mit dem Gehäuse verrastbar. Insbesondere eine lösbare Rastverbindung zwischen dem Klemmring und dem Gehäuse ist von Vorteil.

Das erste Schließglied bildet bei einer bevorzugten Ausgestaltung der Erfindung zusammen mit dem Ventilkörper ein Belüftungsventil aus, das bei Vorliegen eines bestimmten Unterdrucks im Öltank öffnet. Bei einer derartigen Ausgestaltung ist der erste Differenzdruck in Richtung auf die erste Gehäuseöffnung gerichtet, so dass bei Vorliegen eines bestimmten ersten Differenzdruckes das erste Schließglied den ersten Durchlass freigibt und dadurch Luft aus dem Außenraum in den Öltank einströmen kann, d. h. es kann eine Belüftung des Öltankes erfolgen, um einen Unterdruck im Öltank abzubauen.

Das zweite Schließglied bildet bei einer vorteilhaften Ausgestaltung der Erfindung zusammen mit dem Ventilkörper ein Entlüftungsventil aus, das bei Vorliegen eines bestimmten Überdruckes im Öltank öffnet. Bei einer derartigen Ausgestaltung ist der zweite Differenzdruck in Richtung auf die zweite Gehäuseöffnung gerichtet, so dass der Ventilkörper bei Vorliegen eines bestimmten zweiten Differenzdruckes in seine Freigabestellung übergeht, in der eine Entlüftung des Öltanks möglich ist, d. h. ein im Öltank herrschender Überdruck kann über den zweiten Durchlass abgebaut werden.

Von besonderem Vorteil ist es, wenn im Innenraum des Gehäuses zwischen dem Ventilkörper und der ersten oder zweiten Gehäuseöffnung ein Filterelement angeordnet ist. Mittels des Filterelementes kann vermieden werden, dass Schmutzpartikel in den Öltank eindringen können. Bei einer Belüftung des Öltankes durchströmt die in den Öltank einströmende Luft das Filterelement, an dem Schmutzpartikel abgeschieden werden können.

Günstigerweise ist das Filterelement zwischen der zweiten Gehäuseöffnung und dem Ventilkörper angeordnet.

Das Filterelement ist bevorzugt in Form eines Filterbalges ausgestaltet und umfasst ein sternförmig gefaltetes Filtermaterial.

Von Vorteil ist es, wenn das Filterelement eine Rückstellfeder umgibt, die den Ventilkörper mit einer Rückstellkraft beaufschlagt. Dies ermöglicht eine besonders kompakte Bauweise der erfindungsgemäßen Vorrichtung.

Die nachfolgende Beschreibung einer bevorzugten Ausgestaltung der Erfindung dient im Zusammenhang mit der Zeichnung der näheren Erläuterung. Es zeigen:

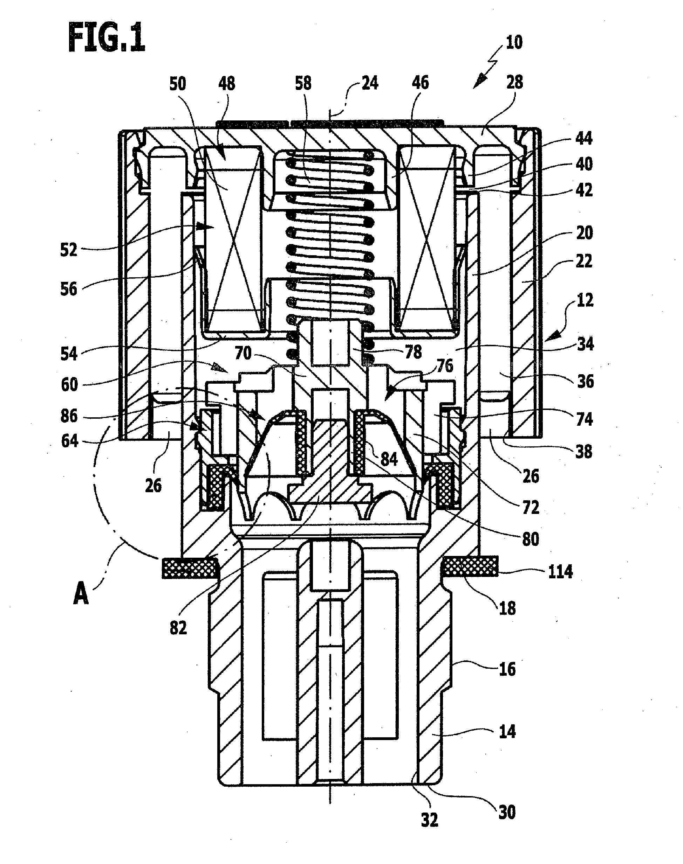

- Figur 1:: eine Schnittansicht einer Vorrichtung zum Be- und Entlüften eines Öltanks und

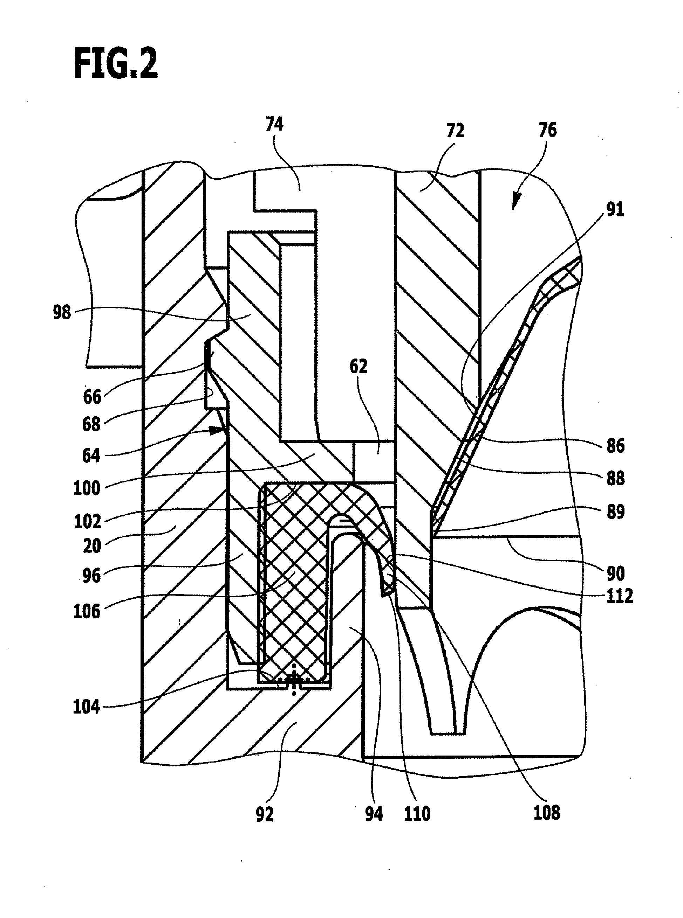

- Figur 2:: eine vergrößerte Darstellung von Detail A aus Figur 1.

In der Zeichnung ist schematisch eine erfindungsgemäße Vorrichtung zum Be- und Entlüften eines Öltanks dargestellt. Die Vorrichtung ist insgesamt mit dem Bezugzeichen 10 belegt und umfasst ein Gehäuse 12 mit einem Rohrstutzen 14, der ein Außengewinde 16 aufweist und über eine radial nach außen gerichtete Außenschulter 18 einstückig in eine zylindrische erste Hülse 20 übergeht. Die erste Hülse 20 ist in Umfangsrichtung von einer zylindrischen zweiten Hülse 22 umgeben, die koaxial zur gemeinsamen Längsachse 24 des Rohrstutzens 14 und der ersten Hülse 20 ausgerichtet ist. Über radial verlaufende Stege 26 ist die zweite Hülse 22 einstückig mit der ersten Hülse 20 verbunden. Ein Gehäusedeckel 28 ist auf der dem Rohrstutzen 14 abgewandten Oberseite in die zweite Hülse 22 eingesetzt und mit dieser verrastet.

Mit seinem der ersten Hülse 20 abgewandten unteren Ende 30 definiert der Rohrstutzen 14 eine erste Gehäuseöffnung 32, die über den ersten Rohrstutzen 14 einen Zugang ermöglicht zu einem Innenraum 34, der von der ersten Hülse 20 umgeben ist. Zwischen der ersten Hülse 20 und der zweiten Hülse 22 erstreckt sich ein Ringraum 36, der über eine zwischen den Stegen 26 angeordnete zweite Gehäuseöffnung 38 mit dem das Gehäuse 12 umgebenden Außenraum verbunden ist und der über einen Spalt 40 mit dem Innenraum 34 in Strömungsverbindung steht. Der Spalt 40 wird einerseits von der dem Rohrstutzen 14 abgewandten Stirnseite 42 der ersten Hülse 20 und andererseits von einem ersten Kragen 44 begrenzt, der innenseitig an den Gehäusedeckel 28 angeformt ist und einen ebenfalls an die Innenseite des Gehäusedeckels 28 angeformten zweiten Kragen 46 umgibt. Der erste Kragen 44 ist ebenso wie der zweite Kragen 46 koaxial zur Längsachse 24 ausgerichtet. Zwischen den ersten Kragen 44 und den zweiten Kragen 46 ist ein Filterelement 48 eingeklebt, das von einem sternförmig gefalteten Filtermaterial 50 gebildet wird und einen hohlzylindrischen Filterbalg 52 ausbildet. Das Filterelement 42 weist auf seiner dem Gehäusedeckel 28 abgewandten Unterseite eine das Filtermaterial 50 umgreifende Endscheibe 54 auf, die mit einem Außenrand 56 nach Art einer Dichtlippe an der Innenseite der ersten Hülse 20 anliegt.

Das Filterelement 48 umgibt eine schraubenförmige Rückstellfeder 58, die sich einerseits am Gehäusedeckel 28 und andererseits an einem im Innenraum 54 in axialer Richtung beweglich gehaltenen Ventilkörper 60 abstützt. Der Ventilkörper 60 ist unter Ausbildung eines Ringspaltes 62 von einem in die erste Hülse 20 eingesetzten Klemmring 64 umgeben, der mit der ersten Hülse 20 verrastet ist. Hierzu trägt der Klemmring 64 an seiner Außenseite einen umlaufenden Rastvorsprung 66, der in eine ringförmige Rastaufnahme 68 der ersten Hülse 20 eintaucht.

Der Ventilkörper 60 weist ein zylindrisches Zentralteil 70 auf, das von einem hohlzylindrischen Außenteil 72 umgeben ist. Vom Außenteil 72 stehen in radialer Richtung mehrere über den Umfang des Außenteiles 72 verteilt angeordnete Halteflügel 74 ab und zwischen dem Außenteil 72 und dem Zentralteil 70 erstreckt sich eine ringförmige Durchbrechung 76, die den Ventilkörper 60 in axialer Richtung durchgreift. Die Durchbrechung bildet einen ersten Durchlass, durch den Luft hindurchströmen kann. Mit seinem dem Gehäusedeckel 28 zugewandten oberen Endbereich bildet das Zentralteil 70 einen hohlzylindrischen ersten Zapfen 78, auf den ein Endbereich der Rückstellfeder 58 aufgesetzt ist. Der erste Zapfen 78 bildet somit eine Federhalterung für die Rückstellfeder 58.

Mit seinem dem Rohrstutzen 14 zugewandten unteren Endbereich bildet das Zentralteil 70 einen hohlzylindrischen zweiten Zapfen 80, in den ein Stopfen 82 eingepresst ist. Der Stopfen 82 ragt in Richtung auf den Rohrstutzen 14 über den zweiten Zapfen 80 hervor und bildet in seinem hervorstehenden Endbereich eine Anlagefläche aus, an der ein auf den zweiten Zapfen 80 aufgestecktes hülsenförmiges Tragteil 84 anliegt. Das Tragteil 84 bildet ein formschlüssig mit dem Ventilkörper 60 verbundenes Halteglied. An die dem Stopfen 82 abgewandte Stirnseite des Tragteiles 84 ist eine Ventilmembran 86 angeformt, die nach Art einer Kugelkalotte ausgebildet ist und sich ausgehend vom zweiten Zapfen 80 des Zentralteiles 70 nach außen über eine vom Außenteil 72 gebildete konische Stützfläche 88 bis zu einer ebenfalls vom Außenteil 72 gebildeten, sich an die konische Stützfläche 88 konzentrisch anschließende zylindrische erste Dichtfläche 89 erstreckt. Die erste Dichtfläche 89 umgibt die Ventilmembran 86 in Umfangsrichtung. Ein Außenrand 90 der Ventilmembran 86 bildet deren Dichtungsbereich aus, der nach Art einer Dichtkante linienförmig an die erste Dichtfläche 89 angelegt werden kann, wenn die Ventilmembran 86 mit einem gegen die Stützfläche 88 gerichteten Differenzdruck beaufschlagt wird. Mit einem sich an den Außenrand 90,anschließenden Stützbereich 91 kann sich die Ventilmembran 86 an der Stützfläche 88 abstützen.

Der Zwischenraum zwischen dem zweiten Zapfen 80 und der sich nach oben, das heißt in Richtung auf den Gehäusedeckel 28 konisch verjüngenden Stützfläche 88 bildet einen konischen Bereich der Durchbrechung 76, in dem die Ventilmembran 86 angeordnet ist. Die Ventilmembran 86 übergreift die Durchbrechung 76 in diesem Bereich. Die Ventilmembran 86 ist aus einem elastisch verformbaren Material hergestellt, beispielsweise aus einem Elastomer. Unter elastischer Verformung kann sich die Ventilmembran 86 von der zylindrischen Dichtfläche 89 abheben.

Die erste Hülse 20 des Gehäuses 12 weist im Übergangsbereich zum Rohrstutzen 14 eine radial nach innen gerichtete Innenschulter 92 auf, an deren Innenrand ein koaxial zur Längsachse 24 ausgerichteter Kragen 94 angeformt ist. In den Bereich zwischen dem Kragen 94 und der erste Hülse 20 taucht der Klemmring 64 mit einem unteren Klemmringabschnitt 96 ein. An den unteren Klemmringabschnitt 96 schließt sich in axialer Richtung ein oberer Klemmringabschnitt 98 an, der außenseitig den Rastvorsprung 66 trägt. Im Bereich zwischen dem unteren Klemmringabschnitt 96 und dem oberen Klemmringabschnitt 98 weist der Klemmring 64 einen radial nach innen gerichteten Vorsprung 100 auf. Der Vorsprung 100 bildet mit seiner der Innenschulter 92 zugewandten Unterseite eine erste Haltefläche 102 und die Innenschulter 92 bildet mit ihrer dem Vorsprung 100 zugewandten Oberseite eine zweite Haltefläche 104. Zwischen die erste Haltefläche 102 und die zweite Haltefläche 104 ist ein ringförmiges Halteglied 106 eingespannt, das radial innenseitig am Kragen 94 und radial außenseitig am unteren Klemmringabschnitt 96 des Klemmrings 64 anliegt. Der radial nach innen gerichtete Vorsprung 100 nimmt einen Abstand zum freien Ende des Kragens 94 ein. Im Bereich zwischen dem Kragen 94 und dem Vorsprung 100 ist an das Halteglied 106 eine Dichtlippe 108 angeformt, die bogenförmig nach innen und unten gekrümmt ist und mit ihrem freien Ende 110 dem Rohrstutzen 14 zugewandt ist. Die Dichtlippe 108 liegt an einer zylindrischen zweiten Dichtfläche 112 an, die von der Außenseite des Außenteils 72 des Ventilkörpers 60 gebildet wird.

Die Be- und Entlüftungsvorrichtung 10 kann mit dem Rohrstutzen 14 in eine Öffnung eines in der Zeichnung nicht dargestellten Öltanks eingeschraubt werden. Hierbei kann die Öffnung des Öltanks mittels eines an der Außenschulter 18 anliegenden Dichtringes 114 abgedichtet werden.

Bildet sich im Öltank ein Unterdruck aus, so nimmt der Ventilkörper 60 unter der Wirkung der Rückstellfeder 58 seine Schließstellung ein, in der er mit den Halteflügeln 74 am Vorsprung 100 des Klemmrings 64 anliegt. In dieser Stellung des Ventilkörpers 60 liegt die Dichtlippe 108 dicht an der sich an die Halteflügel 74 in axialer Richtung anschließenden zylindrischen zweiten Dichtfläche 112 an und der einen zweiten Durchlass ausbildende Ringspalt 62 ist dicht verschlossen. Der Unterdruck im Öltank bewirkt einen ersten Differenzdruck, der die Ventilmembran 86 beaufschlagt, so dass diese von der zugeordneten zylindrischen Dichtfläche 89 abhebt und dadurch den ersten Durchlass in Form der axialen Durchbrechung 76 des Ventilkörpers 60 freigibt. Luft, die über die zweite Gehäuseöffnung 38 in den Innenraum 34 gelangt ist, nachdem sie das Filterelement 48 in radialer Richtung von außen nach innen durchströmt hat, kann folglich die Durchbrechung 76 durchströmen und über den Rohrstutzen 14 in den Öltank gelangen. Die Ventilmembran 86 bildet somit in Kombination mit der zylindrischen ersten Dichtfläche 89 des Ventilkörpers 60 ein Belüftungsventil aus, das bei Vorliegen eines bestimmten Unterdrucks im Öltank öffnet.

Erhöht sich das Ölniveau im Öltank, so bildet sich im Öltank ein Überdruck aus. Dies hat zur Folge, dass der Ventilkörper 60 entgegen der elastischen Rückstellkraft der Rückstellfeder 58 mit einem axial nach oben in Richtung auf den Gehäusedeckel 48 ausgerichteten zweiten Differenzdruck beaufschlagt und dadurch nach oben verschoben wird. Dadurch nimmt die zylindrische zweite Dichtfläche 112 in axialer Richtung einen Abstand zur Dichtlippe 108 ein, so dass über den Ringspalt 62 eine Strömungsverbindung freigegeben wird zwischen dem Rohrstutzen 14 und dem Innenraum 34. Es kann dann Luft aus dem Öltank über die zweite Gehäuseöffnung 38 entweichen, nachdem sie das Filterelement 48 in radialer Richtung von innen nach außen durchströmt hat. Die Dichtlippe 108 bildet somit in Kombination mit der zylindrischen zweiten Dichtfläche 112 des Ventilkörpers 60 ein Entlüftungsventil aus, das bei Vorliegen eines bestimmten Überdrucks im Öltank öffnet. Unter der Wirkung dieses Überdrucks wird gleichzeitig der Dichtungsbereich der Ventilmembran 86 gegen die zugeordnete zylindrische Dichtfläche 89 gepresst und die Ventilmembran 86 kann sich mit ihrem Stützbereich 91 an der konischen Stützfläche 88 abstützen.

Die Durchbrechung 76 bildet einen ersten Durchlass, der von der Ventilmembran 86 dicht verschließbar ist, die in Kombination mit dem schaftartigen Halteglied 84 ein erstes Schließglied ausbildet. Der Ringspalt 62 bildet einen zweiten Durchlass aus, der von der Dichtlippe 108 dicht verschließbar ist. Die Dichtlippe 108 bildet in Kombination mit dem ringförmigen Halteglied 106 ein zweites Schließglied. Mittels der Ventilmembran 86 und der Dichtlippe 108 und der jeweils zugeordneten Dichtflächen 89 bzw. 112 ist sichergestellt, dass die Durchlässe in Form des Ringspaltes 62 und der Durchbrechung 76 dicht verschließbar sind, wenn der Druck im Öltank dem Druck im Außenraum entspricht, und dass die Durchlässe schon bei Vorliegen eines geringen Unterdruckes bzw. eines geringen Überdruckes freigebbar sind, um einen Druckausgleich zu erzielen.

## Patentansprüche

1. Vorrichtung zum Be- und Entlüften eines Öltanks, mit einem Gehäuse (12), dessen Innenraum (34) über eine erste Gehäuseöffnung (32) mit dem Öltank verbindbar ist und der über eine zweite Gehäuseöffnung (38) mit dem das Gehäuse (12) umgebenden Außenraum in Strömungsverbindung steht, wobei zwischen der ersten und der zweiten Gehäuseöffnung (32, 38) ein Ventilkörper (60) im Innenraum (34) axial beweglich gehalten ist, der einen von einem ersten Schließglied verschließbaren und durch Beaufschlagung mit einem ersten Differenzdruck freigebbaren ersten Durchlass (76) aufweist und der ausgehend von einer Schließstellung, in der er in Kooperation mit einem zweiten Schließglied einen zweiten Durchlass (62) verschließt, durch Beaufschlagung mit einem dem ersten Differenzdruck entgegengerichteten zweiten Differenzdruck in eine den zweiten Durchlass (62) freigebende Freigabestellung bewegbar ist, **dadurch gekennzeichnet, dass** das erste Schließglied eine kalottenförmige Ventilmembran (86) umfasst, die einen Dichtungsbereich (90) aufweist, der durch Beaufschlagung der Ventilmembran (86) mit dem ersten Differenzdruck von der ersten Dichtfläche (89) abhebbar und bei Beaufschlagung mit dem zweiten Differenzdruck an die erste Dichtfläche (89) anpressbar ist.

2. Vorrichtung nach Anspruch 1, **dadurch gekennzeichnet, dass** die Ventilmembran (86) elastisch verformbar ist.

3. Vorrichtung nach Anspruch 1 oder 2, **dadurch gekennzeichnet, dass** die erste Dichtfläche (89) die Ventilmembran (86) in Umfangsrichtung umgibt.

4. Vorrichtung nach einem der voranstehenden Ansprüche, **dadurch gekennzeichnet, dass** der Dichtungsbereich (90) der Ventilmembran (86) linienförmig an die erste Dichtfläche (89) anlegbar ist.

5. Vorrichtung nach einem der voranstehenden Ansprüche, **dadurch gekennzeichnet, dass** die Ventilmembran (86) einen Stützbereich (91) aufweist, der durch Beaufschlagung der Ventilmembran (86) mit dem zweiten Differenzdruck von einer Stützfläche (88) abstützbar ist.

6. Vorrichtung nach einem der voranstehenden Ansprüche, **dadurch gekennzeichnet, dass** die Ventilmembran (86) am Ventilkörper (60) gehalten ist.

7. Vorrichtung nach einem der voranstehenden Ansprüche, **dadurch gekennzeichnet, dass** der erste Durchlass (76) einen konischen Bereich aufweist, in dem die Ventilmembran (86) angeordnet ist.

8. Vorrichtung nach einem der voranstehenden Ansprüche, **dadurch gekennzeichnet, dass** die Ventilmembran (86) mit einem schaftartigen Halteglied (84) verbunden ist, das mit dem Ventilkörper (60) formschlüssig verbunden ist.

9. Vorrichtung nach einem der voranstehenden Ansprüche, **dadurch gekennzeichnet, dass** das zweite Schließglied eine Dichtlippe (108) aufweist, die in der Schließstellung des Ventilkörpers (60) in radialer Richtung an einer zugeordneten zweiten Dichtfläche (112) anliegt und die durch eine axiale Bewegung des Ventilkörpers (60) von dessen Schließstellung in dessen Freigabestellung in Abstand zur zweiten Dichtfläche (112) bringbar ist.

10. Vorrichtung nach Anspruch 9, **dadurch gekennzeichnet, dass** sich die Dichtlippe (108) in die dem zweiten Differenzdruck entgegengerichtete Richtung erstreckt.

11. Vorrichtung nach Anspruch 9 oder 10, **dadurch gekennzeichnet, dass** der zweite Durchlass als den Ventilkörper (60) umgebender Ringspalt (62) ausgestaltet ist, der in der Schließstellung des Ventilkörpers (60) von der Dichtlippe (108) verschließbar ist.

12. Vorrichtung nach einem der Ansprüche 9 bis 11, **dadurch gekennzeichnet, dass** die Dichtlippe (108) mit einem ringförmigen Halteglied (106) verbunden ist, das zwischen eine erste Haltefläche (102) und eine zweite Haltefläche (104) eingespannt ist.

13. Vorrichtung nach einem der voranstehenden Ansprüche, **dadurch gekennzeichnet, dass** das erste Schließglied (86) zusammen mit dem Ventilkörper (60) ein Belüftungsventil ausbildet, das bei Vorliegen eines bestimmten Unterdrucks im Öltank öffnet.

14. Vorrichtung nach einem der voranstehenden Ansprüche, **dadurch gekennzeichnet, dass** das zweite Schließglied (108) zusammen mit dem Ventilkörper (60) ein Entlüftungsventil ausbildet, das bei Vorliegen eines bestimmten Überdrucks im Öltank öffnet.

15. Vorrichtung nach einem der voranstehenden Ansprüche, **dadurch gekennzeichnet, dass** im Innenraum (34) des Gehäuses (12) zwischen dem Ventilkörper (60) und einer Gehäuseöffnung (38) ein Filterelement (48) angeordnet ist.

## Claims

1. Device for admitting air to and removing air from an oil tank, having a housing (12), the interior (34) of which is connectable to the oil tank by way of a first housing opening (32) and is in flow connection with the exterior space surrounding the housing (12) by way of a second housing opening (38), a valve body (60) being held between the first and second housing openings (32, 38) so as be axially movable in the interior (34), the valve body comprising a first passage (76) which can be closed by a first closing member and can be released by being acted upon with a first differential pressure, and the valve body being movable from a closing position in which it closes in cooperation with a second closing member a second passage (62) by being acted upon with a second differential pressure directed opposite to the first differential pressure into a releasing position releasing the second passage (62), **characterized in that** the first closing member comprises a dome-shaped valve diaphragm (86) which has a sealing region (90) which can be lifted off the first sealing surface (89) by the valve diaphragm (86) being acted upon with the first differential pressure and can be pressed against the first sealing surface (89) by the valve diaphragm (86) being acted upon with the second differential pressure.

2. Device in accordance with claim 1, **characterized in that** the valve diaphragm (86) is elastically deformable.

3. Device in accordance with claim 1 or 2, **characterized in that** the first sealing surface (89) surrounds the valve diaphragm (86) in the circumferential direction.

4. Device in accordance with any one of the preceding claims, **characterized in that** the sealing region (90) of the valve diaphragm (86) can be linearly positioned against the first sealing surface (89).

5. Device in accordance with any one of the preceding claims, **characterized in that** the valve diaphragm (86) comprises a support region (91) which can be supported by a supporting surface (88) by the valve diaphragm (86) being acted upon with the second differential pressure.

6. Device in accordance with any one of the preceding claims, **characterized in that** the valve diaphragm (86) is held on the valve body (60).

7. Device in accordance with any one of the preceding claims, **characterized in that** the first passage (76) has a conical region in which the valve diaphragm (86) is arranged.

8. Device in accordance with any one of the preceding claims, **characterized in that** the valve diaphragm (86) is connected to a shaft-like holding member (84) which is connected to the valve body (60) in a positively locked manner.

9. Device in accordance with any one of the preceding claims, **characterized in that** the second closing member comprises a sealing lip (108) which, in the closing position of the valve body (60), lies in the radial direction against an associated second sealing surface (112), and which can be placed at a distance from the second sealing surface (112) by axial movement of the valve body (60) from its closing position to its releasing position.

10. Device in accordance with claim 9, **characterized in that** the sealing lip (108) extends in the direction opposite to the second differential pressure.

11. Device in accordance with claim 9 or 10, **characterized in that** the second passage is configured as annular gap (62) which surrounds the valve body (60) and, in the closing position of the valve body (60), can be closed by the sealing lip (108).

12. Device in accordance with any one of claims 9 to 11, **characterized in that** the sealing lip (108) is connected to a ring-shaped holding member (106) which is clamped between a first holding surface (102) and a second holding surface (104).

13. Device in accordance with any one of the preceding claims, **characterized in that** the first closing member (86) forms together with the valve body (60) a valve for admission of air, which opens when a certain underpressure prevails in the oil tank.

14. Device in accordance with any one of the preceding claims, **characterized in that** the second closing member (108) forms together with the valve body (60) a valve for removal of air, which opens when a certain overpressure prevails in the oil tank.

15. Device in accordance with any one of the preceding claims, **characterized in that** a filter element (48) is arranged in the interior (34) of the housing (12) between the valve body (60) and a housing opening (38).

## Revendications

1. Dispositif pour ventiler et purger un réservoir d'huile, comprenant un boîtier (12) dont l'espace intérieur (34) peut être relié au réservoir d'huile par l'intermédiaire d'une première ouverture de boîtier (32) et qui est en communication fluidique avec l'espace extérieur entourant le boîtier (12) par l'intermédiaire d'une deuxième ouverture de boîtier (38), un corps de soupape (60) étant maintenu axialement mobile dans l'espace intérieur (34) entre la première et la deuxième ouverture de boîtier (32, 38), présentant un premier passage (76) pouvant être fermé par un premier élément de fermeture et pouvant être libéré sous l'effet d'une première pression différentielle, ledit corps de soupape, en partant d'une position de fermeture dans laquelle il ferme un deuxième passage (62) en coopération avec un deuxième élément de fermeture, pouvant être déplacé dans une position de libération libérant le deuxième passage (62) sous l'effet d'une deuxième pression différentielle dirigée à l'encontre de la première pression différentielle, **caractérisé en ce que** le premier élément de fermeture comporte une membrane de soupape (86) en forme de calotte qui présente une zone d'étanchéité (90) pouvant être soulevée de la première surface d'étanchéité (89) sous l'effet de la première pression différentielle sur la membrane de soupape (86) et pouvant être pressée contre la première surface d'étanchéité (89) sous l'effet de la deuxième pression différentielle.

2. Dispositif selon la revendication 1, **caractérisé en ce que** la membrane de soupape (86) est déformable élastiquement.

3. Dispositif selon la revendication 1 ou 2, **caractérisé en ce que** la première surface d'étanchéité (89) entoure la membrane de soupape (86) dans la direction circonférentielle.

4. Dispositif selon l'une quelconque des revendications précédentes, **caractérisé en ce que** la zone d'étanchéité (90) de la membrane de soupape (86) peut être appliquée linéairement contre la première surface d'étanchéité (89).

5. Dispositif selon l'une quelconque des revendications précédentes, **caractérisé en ce que** la membrane de soupape (86) comprend une zone d'appui (91), laquelle peut être soutenue par une surface d'appui (86) sous l'effet de la seconde pression différentielle sur la membrane de soupape (86).

6. Dispositif selon l'une quelconque des revendications précédentes, **caractérisé en ce que** la membrane de soupape (86) est maintenue sur le corps de soupape (60).

7. Dispositif selon l'une quelconque des revendications précédentes, **caractérisé en ce que** le premier passage (76) comprend une zone conique dans laquelle la membrane de soupape (86) est disposée.

8. Dispositif selon l'une quelconque des revendications précédentes, **caractérisé en ce que** la membrane de soupape (86) est reliée à un élément de maintien du type tige (84), lequel est relié par coopération de formes au corps de soupape (60).

9. Dispositif selon l'une quelconque des revendications précédentes, **caractérisé en ce que** le second élément de fermeture comprend une lèvre d'étanchéité (108), laquelle repose, dans la position de fermeture du corps de soupape (60) dans la direction radiale sur une seconde surface d'étanchéité (112) associée, et laquelle peut être amenée, par un déplacement axial du corps de soupape (60) de sa position de fermeture à sa position de libération à une certaine distance de la deuxième surface d'étanchéité (112).

10. Dispositif selon la revendication 9, **caractérisé en ce que** la lèvre d'étanchéité (108) s'étend dans le sens dirigé à l'encontre de la deuxième pression différentielle.

11. Dispositif selon la revendication 9 ou 10, **caractérisé en ce que** le deuxième passage est réalisé sous la forme d'une fente annulaire (62) entourant le corps de soupape (60) et pouvant être fermée par la lèvre d'étanchéité (108) dans la position de fermeture du corps de soupape (60).

12. Dispositif selon l'une quelconque des revendications 9 à 11, **caractérisé en ce que** la lèvre d'étanchéité (108) est reliée à un élément de maintien annulaire (106), lequel est monté entre une première surface de maintien (102) et une deuxième surface de maintien (104).

13. Dispositif selon l'une quelconque des revendications précédentes, **caractérisé en ce que** le premier élément de fermeture (86) forme conjointement avec le corps de soupape (60) une soupape de ventilation, laquelle s'ouvre en présence d'une dépression définie dans le réservoir d'huile.

14. Dispositif selon l'une quelconque des revendications précédentes, **caractérisé en ce que** le second élément de fermeture (108) forme conjointement avec le corps de soupape (60) une soupape de purge, laquelle s'ouvre en présence d'une surpression définie dans le réservoir d'huile.

15. Dispositif selon l'une quelconque des revendications précédentes, **caractérisé en ce qu'**un élément filtre (48) est disposé dans l'espace intérieur (34) du boîtier (12) entre le corps de soupape (60) et une ouverture de boîtier (38).
